# EUROPEAN PATENT APPLICATION

(11) **EP 0 903 520 A1**
(43) Date of publication of application: **24.03.1999**
(21) Application number: 98201990.3
(22) Date of filing: 15.06.1998
(51) Int. Cl.: F16K 17/38

(54) **Thermal gas valve fitting**

(30) Priority: 17.09.1997 NL 1007055
(71) Applicant: VSH Fabrieken B.V., 1212 AA Hilversum (NL)
(72) Inventor:
(74) Representative: Lips, Hendrik Jan George, Ir.

(57) **Abstract**

The valve fitting has a housing (1) comprising a valve element (3) biased towards a sealing seat (2) by a spring (4). Said spring (4) comprises a pin (5) mounted to the valve element (3). The pin (5) extends through a spring element (7) and is soldered to a ring (10) using a fusable material (11). The spring element (7) has radial arms (13) being provided with a bend (14) facing the sealing seat (2) and carrying radially turned ribs (15). The latter are snapped into a groove (8) of said housing (1). A conical expansion (16) near the snap-in end of said housing (1) facilitates insertion of the complete component group. The conical sealing seat (2), together with a spherical outer surface (17) of the valve element (3), provides for a reliable sealing, even with excentrical or tilted movement of the valve element.

## Description

The invention relates to a thermal gas valve fitting having a housing and a valve element mounted in said housing, in which said valve element is biased towards a sealing seat by a spring and is kept in the biased state by a fuse from fusable material.

The materials and sealings employed with gas appliances are temperature-sensitive and will be destroyed in case of fire. Thereby, an uncontrolled outflow of gas will occur, which can result in a considerable explosion hazard. When the gas burns in the seat of fire, this will seriously increase the fire. Due to this, the damage caused will increase and furthermore the environment will be polluted. Further, fighting the fire will require a considerably greater amount of water.

These risks can be avoided by thermal gas valve fittings. Said fittings are built-in upstream of said gas appliances in the gas pipes, or be incorporated in the gas appliances or their fittings.

The manufacturing costs of the thermal gas valve fittings reside for a considerable part in manufacture and mounting of the components and component groups mounted in the interior of said housing.

The object of the invention is to minimalize said manufacturing costs.

In order to achieve this, the thermal gas valve fitting of the type described above according to the invention is characterized by a spring element snapped into an internal - groove of said housing, the side of the spring element facing the sealing seat being engaged by the spring for biasing said valve element and the fuse from fusable material engaging the side turned-away from the sealing seat.

Processing of the internal space of said housing is thus limited to the forming of the sealing seat and the internal groove into which the spring element can be snapped. The other components represent a group being supported by the spring element. Inserting said component group into said housing can be effected in a particularly simple way, since it will suffice to slide the group into the housing until the spring element has snapped into the internal groove. Then, the mounting process will have ended, while the component group is exactly and reliably locked in the housing. No additional screw or locking elements are required.

According to a further elaboration of the invention, it is suggested that the spring element has a central body from which at least two, and preferably three radial arms extend, and that each arm is substantially bent in a U-shape and carries a radially bent rib at its free end. Thus, the arms have a relatively large resilient length, as a result of which mounting is facilitated. Furthermore, a very reliable holding force is generated, forcing the flanged ribs into the internal groove of the housing.

The U-shaped bends of the arms of the spring element preferably face the sealing seat for facilitating insertion of the component group into said housing. This purpose is also served by another convenient measure, to wit that at its snap-in end, the housing has a conical expansion for mounting of the spring element.

Further, according to another elaboration of the invention it is suggested that the spring element has a central aperture, through which a pin extends which is mounted at the valve element and is enclosed by the spring, the fuse of fusable material being mounted on the end of the pin protruding through the spring element.

It is particularly advantageous, that the fuse from fusable material has a ring, which has been put on the end of the pin and is connected to it by fusable material. Preferably, the pin is screwed into the valve element, in which the valve element's end face facing the sealing seat is provided with a slot for a screw driver.

In mounting, the ring is put onto the end of the pin and soldered to it, in which the solder is the fusable material. Then, the pin is stuck through the central aperture of the spring element. Subsequently, one slides the spring over the pin and one screws the valve element on it, in which the spring is biased. Then, the component group is ready for being snapped into the housing of the valve fitting. Therefore, manufacturing and mounting costs are low.

On thermal activation of said valve fitting, the valve element together with the pin is shot against the sealing seat. Guiding said movement is now only possible by said spring, since the pin has come free of said spring element. Then there is a risk that the valve element will tilt during movement thereof. In order to minimalize said risk, it is suggested to provide the valve element with a shoulder enclosing the spring, at the side turned-away from the sealing seat.

In this connection, one must take into consideration that on compressing the spring, the inner diameter of the spring will get larger, as a result of which the spring first properly encloses the pin in a stretched position. Thus, certain uncontrolled movements can hardly be avoided. However, to provide for, that the valve fitting will reliably seal on thermal activation thereof, according to a further elaboration of the invention it is suggested that the sealing seat is conically shaped and that the valve element has a spherical outer surface at least in the sealing region. The valve element penetrates the cone of said sealing seat and forces itself sealingly against its wall. Due to that, the valve element is automatically centered. Further, in connection with the spherical outer surface of the valve element, tilting movements are allowed, since they do not adversely affect the sealing action.

The invention is further explained in the following in connection with the accompanying drawing. In the drawing:
Fig. 1 shows an axial cross-section across a thermal valve fitting in its non-operative position;
Fig. 2 shows the fitting according to Fig. 1, yet in its operative position;
Fig. 3 shows a view of a spring element.

The thermal valve fitting comprises a housing 1 defining a conical sealing seat 2. Further, the housing 1 comprises a valve element 3, which is biased towards the sealing seat 2 by a spring 4. The valve element 3 is screwed onto a pin 5, by means of a screw driver slot 6.

The component group described above is held within the housing by a spring element 7 which has been snapped into an internal groove 8. The spring element 7 has a central aperture 9, through which the pin 5 has been stuck. The pin carries a ring 10 at its end, said ring being soldered on the pin using a fusable material 11. Said ring 10 is forced against the spring element 7 by the spring 4, in which the spring 4 operates between the valve element 3 and the spring element 7.

The spring element 7 has a central body 12, from which radial arms 13 extend. In the present case it concerns three radial arms 13, one of which being shown turned across 60°. Each radial arm has a substantially U-shaped bend 14 facing the sealing seat 2. This facilitates inserting the component group into the housing 1 and generates a sufficient holding force in the bent ribs 15, by which the spring element 7 engages the internal groove 8. Insertion of the spring element 7 is further facilitated by a conical expansion 16 being situated near the snap-in end of said housing 1.

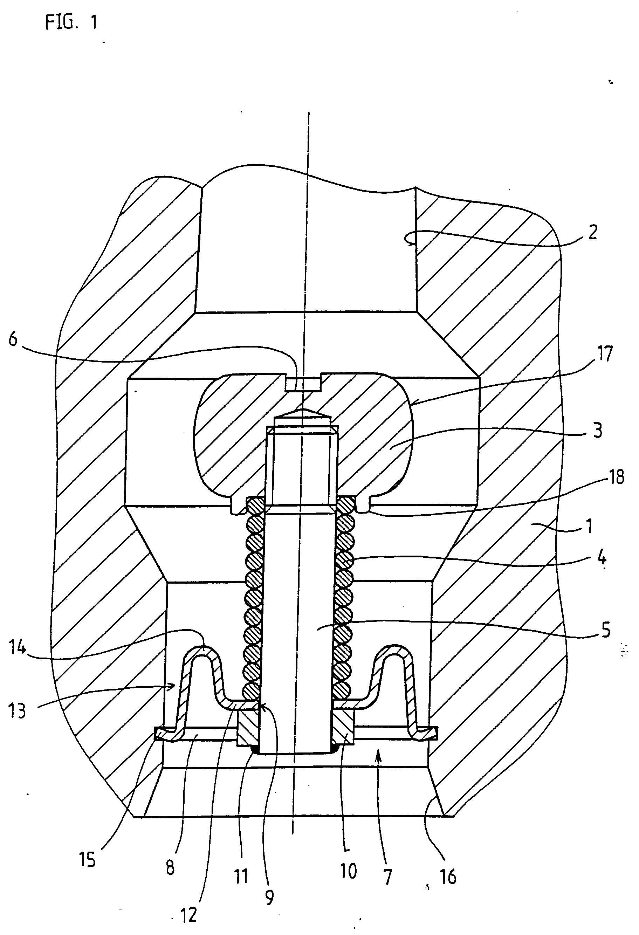

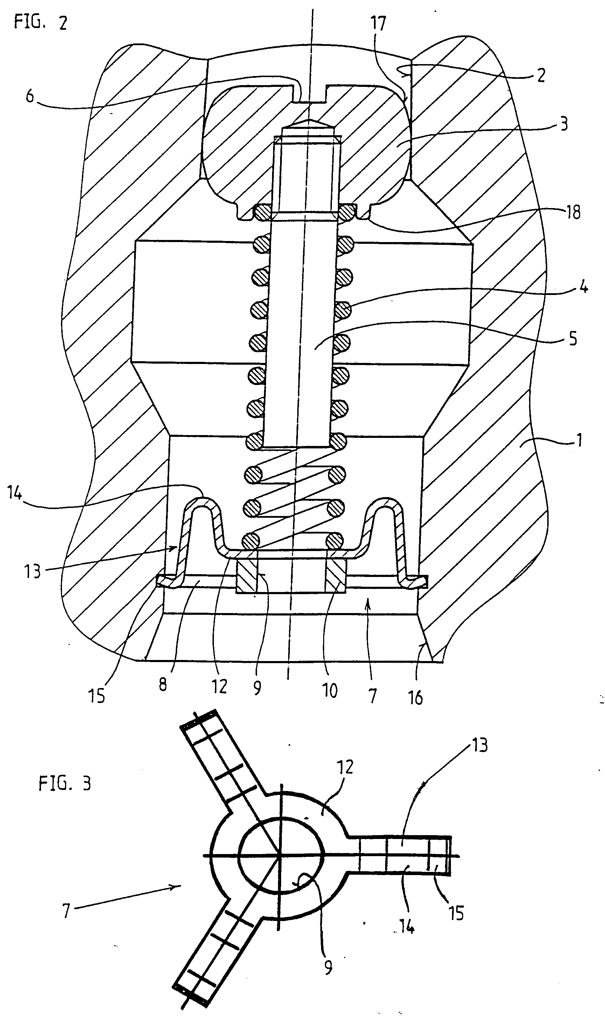

On thermal activation of said valve fitting, that is, with the change from the position according to Fig. 1 to the position according to Fig. 2, the material 11 fuses, as a consequence of which the pin 5 will come free of the ring 10 and thus of the spring element 7. The valve element 3 is shot into the sealing seat 2 by the spring, taking the pin 5 along. Since the valve element 3 has a spherical outer surface 17 in the sealing region, it will also penetrate the conical sealing seat 2 when the spring 4 does not provide an exact centric guiding of said pin 5. Furthermore, the spherical surface 17 offers the possibility of providing tilting movements of the valve element 3, without the sealing action of the valve fitting being affected.

Further, the valve element 3 bears a shoulder 18, by which the spring 4 is additionally held.

Variations within the scope of the invention are possible. Thus, e.g. the U-shaped bends of the spring element can be facing the opposite side, although the illustrated embodiment is particularly advantageous. Further, it is possible to provide the spring element with two or more than three radial arms. However, three arms will be the optimum, both with regard to the manufacturing aspect and a careful centering. The valve element can be a whole with the pin, in which the slot for the screw driver can be omitted. Finally, it is possible to solder the pin directly to the spring element using the fusable material.

## Claims

1. Thermal gas valve fitting having a housing (1) and a valve element (3) mounted in said housing, in which said valve element is biased towards a sealing seat (2) by a spring (4) and is kept in the biased state by a fuse from fusable material, characterized by a spring element (7) snapped into an internal groove (8) of said housing (1), the side of the spring element facing the sealing seat (2) being engaged by the spring for biasing said valve element and the fuse from fusable material engaging the side turned-away from the sealing seat.

2. Valve fitting according to claim 1, characterized in that the spring element (7) has a central body (12) from which at least two, and preferably three radial arms (13) extend, and that each arm is substantially bent in a U-shape and carries a radially bent rib (15) at its free end.

3. Valve fitting according to claim 2, characterized in that the U-shaped bends (14) of the arms (13) of the spring element (7) face the sealing seat (2).

4. Valve fitting according to one of the claims 1 to 3, characterized in that at its snap-in end, the housing (1) has a conical expansion (16) for mounting the spring element (7).

5. Valve fitting according to one of the claims 1 to 4, characterized in that the spring element (7) has a central aperture (9), through which a pin (5) extends which is mounted at the valve element (3) and is enclosed by the spring (4), the fuse of fusable material being mounted on the end of the pin (5) protruding through the spring element (7).

6. Valve fitting according to claim 5, characterized in that the fuse from fusable material has a ring (10), which has been put on the end of the pin (5) and is connected to it by fusable material.

7. Valve fitting according to claim 5 or 6, characterized in that the pin (5) is screwed into the valve element (3), in which the valve element's end face facing the sealing seat (2) is provided with a slot (6) for a screw driver.

8. Valve fitting according to one of the claims 1 to 7, characterized in that at its side turned away from the sealing seat (2), the valve element (3) is provided with a shoulder (18) enclosing the spring (4).

9. Valve fitting according to one of the claims 1 to 8, characterized in that the sealing seat (2) is conically shaped and that the valve element (3) has a spherical outer surface (17) at least in the sealing region.
